# EUROPEAN PATENT SPECIFICATION

(11) **EP 0 677 066 B1**
(45) Date of publication and mention of the grant of the patent: **14.10.1998**
(21) Application number: 94903675.0
(22) Date of filing: 17.12.1993
(51) Int. Cl.: C08F 10/00, C08F 4/654, C08F 4/658

(54) **OLEFIN POLYMERIZATION CATALYST**
OLEFINPOLYMERISATIIONSKATALYSATOR
CATALYSEUR DE POLYMERISATION D'OLEFINE

(30) Priority: 31.12.1992 US 999443
(43) Date of publication of application: 18.10.1995
(73) Proprietor: UNION CARBIDE CHEMICALS & PLASTICS TECHNOLOGY CORPORATION, Danbury, Connecticut 06817-0001 (US)
(72) Inventor: MORSE, David, Bell, Houston, TX 77077 (US)
(74) Representative: Allard, Susan Joyce
(86) International application number: US9312329
(87) International publication number: WO9415977

(56) References cited:
- EP-A- 0 415 704
- EP-A- 0 481 749
- US-A- 4 497 905

## Description

### Technical Field

This invention relates to a high activity olefin polymerization catalyst and to a method for the production thereof. More particularly, the invention relates to a magnesium-containing, titanium-containing precursor component of an olefin polymerization procatalyst, to the procatalyst and catalyst produced from that component and to the process of polymerizing olefins which employs such catalyst.

### Background Art

High-activity catalysts which are produced from an aluminum alkyl compound, an electron donor, and a halogenated titanium compound on a solid carrier containing various magnesium compounds are known for polymerizing α-olefins. The most commonly used magnesium compound is anhydrous magnesium chloride, either alone or together with other magnesium compounds, or organic magnesium compound manufactured by halogenating organic magnesium compounds with compounds containing chlorine. The magnesium compound may also be included in the solid carrier component for which silica is most commonly used.

In these types of polymerization catalysts, the properties of the solid carrier component have significant influence upon the properties of the final catalyst, e.g. the activity thereof. These properties can be essentially influenced by the method of producing the carrier components.

In the terms now conventionally employed for the components, the high activity olefin polymerization catalysts are formed from a procatalyst which typically contains magnesium, titanium and halide moieties as well as an electron donor, a cocatalyst which is usually an organoaluminum compound and a selectivity control agent which may be provided as a partial or total complex with the cocatalyst. Although each of the components has a considerable influence on the polymerization catalyst and process and the polymer product thereby produced, the nature of the catalyst as well as the polymerization product seems to be most influenced by the procatalyst. Much of the research directed toward improvement of the olefin polymerization process has been directed toward improvement of the procatalyst component.

Kioka et al, U.S. 4,300,649, describe a solid catalyst component (procatalyst) obtained by heating a soluble magnesium compound such as magnesium chloride with a higher alcohol in the presence of an ester to produce a solution which is added to titanium tetrachloride and an electron donor to form the procatalyst. Band, U.S. 4,472,521, reacts a magnesium alkoxide with a titanium alkoxide wherein each alkoxide has 4 or more carbon atoms in the presence of aromatic hydrocarbon. Titanium tetrachloride and an electron donor are added to the resulting solution to form a procatalyst which is post-treated with transition metal halide. Arzoumanides et al, U.S. 4,540,679, produce a catalyst component by contacting a suspension of magnesium ethoxide in ethanol with carbon dioxide. The addition of an organoaluminum compound in hydrocarbon solvent to the resulting solution produces spherical particles which are used as a support for titanium moieties upon contacting the particles with titanium tetrachloride. Nestlerode et al, U.S. 4,728,705, solubilize magnesium ethoxide in ethanol with carbon dioxide and spray dry the resulting solution or alternatively use the solution to impregnate catalyst support particles. The particles resulting from either modification are useful in the production of a procatalyst of desirable morphology.

Further, Job, U.S. 5,124,298, describes a catalyst system comprising (A) a solid procatalyst obtained by contacting a magnesium alkoxide, titanium alkoxide, titanium halide, a phenolic compound and an alkanol, wherein the alkanol is removed; (B) an organoaluminum cocatalyst and (C) a selectivity control agent.

It would be of advantage to provide improved olefin polymerization procatalysts and resulting catalysts having improved activity, and increased selectivity for isotactic polypropylene.

### Disclosure of the Invention

The present invention relates to an improved olefin polymerization catalyst system having increased activity based on the amount of titanium present in the procatalyst and to a process of polymerizing α-olefins in the presence of such catalyst.

More particularly, the present invention relates to a catalyst precursor for the polymerization catalyst system used in polymerizing one or more α-olefins. The catalyst precursor is prepared by contacting, at elevated temperature, (a) procatalyst component obtained by contacting a magnesium alkoxide, a metal alkoxide, a metal halide, a phenolic compound, and an alkanol and then optionally removing the alkanol from the resulting mixture, with (b) at least one halogenating compound which is halogenated transition metal compounds, halogenated non-metallic compounds or mixtures thereof in the presence or absence of an inert diluent but in the absence of an electron donor.

Further, the invention relates to a process for the production of polymers using the high activity olefin polymerization catalyst system obtained by contacting
(a) an olefin procatalyst obtained by contacting (i) the catalyst precursor, (ii) a tetravalent titanium halide, and (iii) an electron donor, with
(b) an organoaluminum cocatalyst; and
(c) a selectivity control agent.

As a result of the present invention, the catalyst processing/manufacturing cost, such as operating cost and solvent recovery processing cost, are dramatically reduced. Further polymerization of α-olefins using the catalyst of this invention results in higher activity and polymers having increased selectivity, increased bulk density, improved morphology and less titanium residual.

### Best Mode For Carrying Out the Invention

The present invention contemplates the production of an olefin polymerization procatalyst precursor obtained by contacting (a) a solid procatalyst component which is obtained by contacting a magnesium alkoxide, a titanium alkoxide, a metal halide, a phenolic compound, and an alkanol and then optionally removing the alkanol from the resulting mixture, with (b) at least one halogenated compound which is halogenated transition metal compounds, halogenated non-transition metal compounds, halogenated non-metallic compounds or mixtures thereof at an elevated temperature. Optionally, the solid procatalyst component and the halogenated compound are contacted at elevated temperature in the presence of an inert diluent such as hydrocarbon, halohydrocarbon or mixtures thereof. The procatalyst precursor is contacted with tetravalent titanium halide and an electron donor with or without inert diluent such as hydrocarbon, halohydrocarbon or mixtures thereof, to produce the procatalyst as spheroidal particles. Contacting the procatalyst with an organoaluminum compound cocatalyst and a selectivity control agent results in the production of high activity olefin polymerization catalyst system which is useful in the polymerization of lower α-olefins to a highly selective polymeric product.

The magnesium alkoxide employed in the preparation of the procatalyst component is typically of the general formula

Mg(O-R)

wherein R is a hydrocarbyl group having up to 20 carbon atoms, the hydrocarbyl group is alkyl such as methyl, ethyl, propyl or butyl, aryl such as phenyl or naphthyl, alkaryl such as p-tolyl or ethylphenyl, alkyl such as phenethyl or benzene having inert substituent groups attached thereto, or a acyl ester such as methyl carbonate or ethyl carbonate. It is preferred that R is alkyl of up to 6 carbon atoms, with alkyl of up to 3 carbon atoms being more preferred. Examples of suitable magnesium alkoxides include magnesium methoxide, magnesium ethoxide, magnesium propoxide, magnesium butoxide, magnesium phenoxide, magnesium phenethoxide, magnesium p-toloxide, magnesium isobutoxide, carbonated magnesium ethoxide and magnesium naphthoxide. Magnesium ethoxide is preferred.

According to the invention, the magnesium alkoxide, such as magnesium ethoxide, is contacted with a metal alkoxide such as titanium ethoxide, a metal halide such as a titanium halide such as a titanium tetrahalide, or a magnesium halide such as magnesium chloride, magnesium chloroalcoholate, or magnesium chloride alcohol complex, a phenolic compound, and an alkanol. The preferred titanium tetrahalide is titanium tetrachloride. The alkanol is optionally removed from the resulting solution and the resulting solution is contacted with the halogenating compound. Optionally, the solids are isolated from the resulting solution and then contacted with the halogenated compound.

The phenolic compound used in the production of the procatalyst component is selected from phenol or activating group-substituted phenol. By the term "activating group" is meant an aromatic ring carbon atom substituent free from active hydrogens which is ortho-para directing for conventional aromatic ring substitution and which is generally but not invariably electron donating. Illustrative of such groups are alkyl of up to 5 carbon atoms inclusive, e.g., methyl, ethyl, isopropyl or n-butyl, alkoxy of up to 5 carbon atoms, e.g., methoxy, ethoxy, or i-propoxy, halogens, particularly chloro or bromo; and dialkylamino wherein each alkyl independently has up to 5 carbon atoms inclusive such as dimethylamino, diethylamino and methylpropylamino. Illustrative of phenolic compounds which are useful in the production of the procatalyst precursor are phenol, o-cresol, p-cresol, 3-methoxyphenol, 4-dimethyl-aminophenyl, 2,6-di-tert-butyl-4-methylphenol and p-chloro-phenol. Of such phenolic compounds the use of alkyl-substituted phenol is preferred and particularly preferred is the use of o-cresol.

Optionally, the complex, solid procatalyst component is produced by contacting the reactants in an inert diluent. The diluent is suitably a hydrocarbon such as isopentane, isooctane, cyclohexane, toluene, p-xylene, o-xylene, m-xylene, cumene, mesitylene or ethylbenzene, a halohydrocarbon such as methylene chloride or chlorobenzene, or mixtures thereof. Isooctane and toluene are the preferred hydrocarbons and chlorobenzene is a preferred halohydrocarbon.

According to U.S. 5,124,298, Job one alternative for producing the solid procatalyst component is illustrated by the following partial general equation which employs the preferred alkoxide and halide moieties,

3 Mg(OEt)₂ + x Ti(OEt)₄ + y TiCl₄ + z o-cresol + n EtOH

wherein y is more than 0.1 but less than about 0.8, preferably more than 0.3 but less than 0.5, (x + y) is more than about 0.2 but less than about 3, preferably more than about 0.5 but less than about 2, z is more than about 0.05 but less than about 3, preferably more than about 0.1 but less than about 2, and n is more than about 0.5 but less than about 9, preferably more than about 1 but less than about 5.

The initial interaction of the reactants in the inert diluent takes place in a non-gaseous state at a moderate reaction temperature. Suitable reaction temperatures are from about 30°C to about 120°C, preferably from about 35°C to about 110°C. This initial heating results in the formation of a generally clear solution. This solution is then heated to a higher temperature to optionally remove alkanol, ethanol in the preferred alkanol typically as an azeotrope with a portion of the inert diluent. The temperature of this second heating will depend in part on the boiling point of any azeotrope containing alkanol which is formed. Typical heating (azeotroping) temperatures are from about 85°C to about 110°C.

According to the invention, the procatalyst component is contacted with at least one halogenating compounds, such as halogenated transition metal compounds, halogenated non-transition metal compounds, halogenated non-metallic compounds or mixtures thereof, to produce a solid procatalyst precursor product. Preferably, the halogenated compound contains 1 to 6 halogen atoms, with 1 to 4 halogen atoms being more preferred. Exemplary halogen atoms include chlorine, bromine, iodine and fluorine. The preferred halogen is chlorine. The preferred halogenated non-transition metal compounds are compounds in which the metal is a Group IIA, IIIA or IVA metal such as magnesium, aluminum, gallium, and tin, as defined by the Chemical Abstract Service Registry (CAS) in the Periodic Table of Elements. Group IVA metal compounds, as defined by CAS, are the preferred metals for the halogenated non-transition metal compounds. The preferred halogenated transition metal are compounds in which the metal is a Group IVB metal such as titanium, zirconium and halfnium, as defined by CAS. The preferred Group IVB metal is titanium.

Suitable chlorine-containing non-metallic compounds include thionyl chloride, silicon tetrachloride, hydrogen chloride, oxalyl chloride, sulfuryl chloride, phosphorus trichloride, carbonyl chloride, boron trichloride and carbon tetrachloride. Suitable chlorine-containing transition metal compounds include titanium tetrachloride, zirconium tetrachloride, halfnium tetrachloride or mixtures thereof. The preferred chlorine-containing transition metal compound is titanium tetrachloride. The preferred halogenating compounds are thionyl chloride, silicon tetrachloride, titanium tetrachloride and tin tetrachloride. The use of thionyl chloride results in a combination of high bulk densities, good polymer yields and low xylene solubles and is therefore the more preferred halogenating compound. Further, without being bound to theory, it is believed that halogenation of the procatalyst component with thionyl chloride results in substantial removal of the titanium present in the procatalyst component.

Sufficient halogenating compound is provided so that the molar ratio of chlorine to magnesium is from about 0.5 to about 50. It is preferred that the molar ratio of chlorine to magnesium is from about 1.5 to about 20, with a molar ratio from about 2 to about 10 being more preferred. Further, it is preferred the sufficient chlorinating agent is provided so that the molar ratio of chlorine to ethoxide present in the procatalyst component is from about 0.1 to about 50, with a molar ratio of chlorine to ethoxide from about 0.5 to about 10 being more preferred. A molar ratio from about 1.0 to about 3.0 is most preferred.

The solid procatalyst component and the halogenated compound are contacted at elevated temperature. Optionally, the procatalyst precursor and the halogenated compound are contacted at elevated temperature in the presence of an inert diluent such as a hydrocarbon, halohydrocarbon or mixtures thereof in which the halogenated compound is soluble but the reaction product thereof is insoluble. Suitable inert diluents include hydrocarbons, such as isooctane and isopentane, aromatic hydrocarbons such as benzene, toluene, isopropylbenzene and xylene, aromatic halohydrocarbons such as chlorobenzene, dichlorobenzene and bromobenzene and mixtures thereof. The preferred inert diluents are toluene, xylene, isopropylbenzene, chlorotoluene and chlorobenzene and mixtures thereof.

If necessary, mixing of the procatalyst component and the halogenating compound is facilitated by conventional procedures such as shaking or stirring of the mixture in a conventional apparatus. The mixture is heated to an elevated temperature in the range from about 40°C to about 150°C and held at such temperature for a sufficient period of time to permit substantial chlorination. It is preferred that the mixture is heated for a period of time in the range of about 15 minutes to about 180 minutes, with a period of time in the range of 40 minutes to 120 minutes being more preferred. Heating the mixture at an elevated temperature from about 50°C to about 120°C is preferred, with a temperature from about 65°C to 100°C being more preferred. The resulting solid procatalyst precursor is recovered by filtration or decantation. This solid procatalyst precursor is typically contacted with a light hydro-carbon such as isooctane or isopentane and dried, although the recovered solid may be used in the production of procatalyst without additional treatment.

The olefin polymerization procatalyst is produced by contact of the solid procatalyst precursor with a tetravalent titanium halide in the presence of an optional inert diluent and an electron donor. The tetravalent titanium halide contains at least two halogen atoms, and preferably contains four halogen atoms. The halogen atoms are chlorine atoms, bromine atoms, iodine atoms, or fluorine atoms. The tetravalent titanium halide compounds have up to two alkoxy or aryloxy groups. Examples of suitable tetravalent titanium halide compounds include alkoxy titanium halides such as diethoxytitanium dichloride, diethoxytitanium dibromide, isopropoxytitanium trichloride, and phenoxytitanium trichloride, titanium tetrahalides such as titanium tetrachloride or titanium tetrabromide. The preferred tetravalent titanium halide is titanium tetrachloride.

It is preferred that the inert diluent optionally employed in the production of the olefin polymerization procatalyst is a hydrocarbon or a halohydrocarbon, each of up to 12 carbon atoms inclusive, more preferably of up to 9 carbon atoms inclusive. Exemplary hydrocarbons include isooctane, isopentane, toluene, ethylbenzene, benzene, xylene, diethylbenzene, isopropylbenzene, trimethylbenzene and hexane. The preferred halohydrocarbon are aliphatic halohydrocarbons or aromatic halohydrocarbons. Exemplary aliphatic halohydro-carbons are methylene chloride, dichloroethane, methylene bromide, chloroform, carbon tetrachloride, 1,2-dibromoethane, 1,1,3-trichloropropane, trichlorocyclohexane, dichlorofluoro-methane and tetrachloroisooctane. Suitable aromatic halohydrocarbons include chlorobenzene, bromobenzene, dichlorobenzene and chlorotoluene. Of the aliphatic halohydrocarbons, carbon tetrachloride and 1,1,2-trichloroethane are preferred. The preferred inert diluents are chlorobenzene, chlorotoluene, isopropylbenzene, xylene and toluene.

The electron donors which are suitably included within the procatalyst are the generally conventional electron donors employed in titanium-based olefin polymerization procatalysts including ethers, esters, ketones, amines, imines, nitriles, phosphines, stibines, arsines and alcoholates. The preferred electron donors are esters and particularly aliphatic esters of aromatic monocarboxylic or dicarboxylic acids. Examples of such preferred electron donors are methyl benzoate, ethyl benzoate, ethyl p-ethoxybenzoate, ethyl p-methylbenzoate, diethyl phthalate, diisobutyl phthalate, diisopropyl terephthalate and dimethyl naphthalenedicarboxyate. The electron donor is a single compound or a mixture of two or more compounds but preferably the electron donor is provided as a single compound. Of the preferred ester electron donors, ethyl benzoate and diisobutyl phthalate are particularly preferred. Sufficient electron donor is provided so that the molar ratio of electron donor to magnesium in the procatalyst is from about 0.002 to about 0.3. It is preferred that the molar ratio of electron donor to magnesium in the procatalyst is from about 0.03 to about 0.2, with a ratio from about 0.03 to 0.16 being more preferred.

The manner by which the solid procatalyst precursor, tetravalent titanium halide, the optional inert diluent and the electron donor are contacted is material but not critical and is generally conventional. In one embodiment the procatalyst precursor and the tetravalent titanium halide are mixed and the electron donor is subsequently added to the resulting mixture. In an alternate embodiment, the electron donor and procatalyst precursor are mixed with the tetravalent titanium halide or a mixture of tetravalent titanium halide and optional inert diluent and the resulting solid is contacted one or more additional times with tetravalent titanium halide or the mixture of tetravalent titanium halide and optional inert diluent. The initial contacting of electron donor, procatalyst precursor and tetravalent titanium halide or tetravalent titanium halide/optional inert diluent mixture is suitably conducted at a temperature from about ambient to about 150°C. Better interaction of these materials is obtained if they are heated and initial contacting temperatures from about 70°C to about 130°C are preferred, with temperatures from about 75°C to about 110°C being more preferred.

Contacting of the procatalyst precursor with the halogenated tetravalent titanium compound is effected by using an excess of the titanium compound. At least 2 moles of the titanium compound should ordinarily be used per mole of the magnesium compound. Preferably from 4 moles to 100 moles of the titanium compound are used per mole of the magnesium compound, and most preferably from 8 moles to 20 moles of the titanium compound are used per mole of the magnesium compound. The contacting is conducted in one or more operations, each of which is conducted over a period of time ranging from a few minutes to several hours. Usually the reaction is allowed to proceed over 0.1 to 6 hours, preferably from about 0.5 to about 3.5 hours.

During each contacting with tetravalent titanium halide, a portion of the inert diluent is optionally present and the reaction is facilitated on some occasions by the additional presence of an acid halide such as benzoyl chloride or phthaloyl chloride. The solid procatalyst, obtained as spherical particles, is typically finished by a final wash with an inert hydrocarbon of up to 10 carbon atoms and drying under nitrogen. Exemplary of the inert hydrocarbons that are suitable for the washing are isopentane, isooctane, hexane, heptane and cylohexane.

The preferred final washed product has a titanium content of from 0.5 percent by weight to 5.0 percent by weight. A more preferred product has a titanium content of from 1.5 percent by weight to 4.0 percent by weight, with a titanium content from 1.5 percent by weight to 3.5 percent by weight being most preferred. The atomic ratio of titanium to magnesium in the final product is between 0.02 and 0.14, preferably between 0.03 and 0.10. The procatalyst so obtained is storage stable so long as oxygen and active hydrogen compounds are excluded. Alternatively, however, the procatalyst is used as obtained directly from the hydrocarbon wash without the need for drying. The procatalyst is used in the production of olefin polymerization catalyst by contact of the procatalyst with organoaluminum cocatalyst and a selectivity control agent.

The cocatalyst is an organoaluminum compound which is selected from the aluminum-based cocatalysts conventionally employed with titanium-based procatalysts. Illustrative organoaluminum compounds are trialkylaluminum compounds, alkylaluminum alkoxide compounds and alkylaluminum halide compounds wherein each alkyl independently has from 2 to 6 carbon atoms inclusive. The preferred organoaluminum compounds are halide free and particularly preferred are the trialkyl-aluminum compounds such as triethylaluminum, triisobutyl-aluminum, triisopropylaluminum and diethylhexylaluminum. Triethylaluminum is the preferred member of the class of trialkylaluminum compounds. The cocatalyst is employed in a sufficient quantity to provide a ratio of aluminum atoms to titanium atoms in the procatalyst from about 1:1 to about 300:1 but preferably from about 10:1 to about 100:1.

The selectivity control agents which are employed in the production of the olefin polymerization catalyst are typically those conventionally employed in conjunction with titanium-based procatalysts and organoaluminum cocatalysts. Suitable selectivity control agents include those electron donors as listed above for use in procatalyst production but also include organosilane compounds such as alkylalkoxysilanes and arylalkoxysilanes of the formula

R'ᵣSi(OR)₄₋ᵣ

wherein R' is alkyl or aryl of up to 32 carbon atoms inclusive, R is lower alkyl of up to 12 carbon atoms and r is 0 to 3.

Illustrative of the suitable selectivity control agents are esters such as ethyl p-ethoxybenzoate, diisobutyl phthalate, ethyl benzoate and ethyl p-methylbenzoate, and organosilanes such as diisobutyldimethoxysilane, n-propyltrimethoxysilane, tetraethoxysilane, cyclohexylisobutyl dimethoxysilane, dicyclohexyldimethoxysilane, n-octadecyltri-methoxysilane, methyl-n-decyldimethoxysilane, methyl-n-octadecyldiethoxysilane, methyl-n-octadecyldimethoxysilane, isopropyltrimethoxysilane, n-octadecyltriethoxysilane, ethyltriethoxysilane, and cyclohexylmethyldimethoxysilane. The selectivity control agent is provided in a quantity sufficient to provide from about 0.01 mole to about 100 moles per mole of titanium in the procatalyst. It is preferred that the selectivity control agent is provided in a quantity sufficient to provide from about 0.5 mole to about 70 moles per mole of titanium in the procatalyst, with about 8 moles to about 50 moles being more preferred.

The components of the olefin polymerization catalyst are usefully contacted by mixing in a suitable reactor outside the system in which α-olefin is to be polymerized and the catalyst thereby produced is subsequently introduced into the polymerization reactor. Alternatively, however, the catalyst components are introduced separately into the polymerization reactor or, if desired, two or all of the components are partially or completely mixed with each other (e.g. premixing selectivity control agent and the catalyst) before they are introduced into the polymerization reactor.

The olefin polymerization catalyst of the invention is useful in the polymerization of α-olefins and particularly in the polymerization of α-olefins of up to 20 carbon atoms, inclusive, e.g., propylene, 1-butene, dodecene or mixtures thereof. It is preferred that α-olefins of 3 carbon atoms to 10 carbon atoms, such as propylene, butene-1 and pentene-1 and hexene-1, are polymerized, and if copolymerization, α-olefins of 2 carbon atoms to 10 carbon atoms.

The particular type of polymerization process utilized is not critical to the operation of the present invention and the polymerization processes now regarded as conventional are suitable in the process of the invention. The polymerization is conducted under polymerization conditions as a liquid phase or as a gas-phase process employing a fluidized catalyst bed.

The polymerization conducted in the liquid phase employs as reaction diluent an added inert liquid diluent or alternatively a liquid diluent which comprises the olefin, such as propylene or 1-butene, undergoing polymerization. If a copolymer is prepared wherein ethylene is one of the monomers, ethylene is introduced by conventional means to a diluent. Typical polymerization conditions include a reaction temperature from about 25°C to about 125°C, with temperatures from about 35°C to about 90°C being preferred and a pressure sufficient to maintain the reaction mixture in a liquid phase. Such pressures are from about 10.5kg/cm² (150 psi) to about 84kg/cm² (1200 psi), with pressures from about 17.5kg/cm² (250 psi) to about 63kg/cm² (900 psi) being preferred. The liquid phase reaction is operated in a batchwise manner or as a continuous or semi-continuous process. Subsequent to reaction, the polymer product is recovered by conventional procedures. The precise control of the polymerization conditions and reaction parameters of the liquid phase process are within the skill of the art.

As an alternate embodiment of the invention, the polymerization may be conducted in a gas phase process in the presence of a fluidized catalyst bed. One such gas phase process polymerization process is described in Goeke et al, U.S. Patent 4,379,759. The gas phase process typically involves charging to reactor an amount of preformed polymer particles, gaseous monomer and separately charging a lesser amount of each catalyst component, i.e., procatalyst, cocatalyst and selectivity control agent. Gaseous monomer, such as propylene, is passed through the bed of solid particles at a high rate under conditions of temperature and pressure sufficient to initiate and maintain polymerization. Unreacted olefin is separated and recycled. Polymerized olefin particles are collected at a rate substantially equivalent to its production. The process is conducted in a batchwise manner or a continuous or semi-continuous process with constant or intermittent addition of the catalyst components and/or α-olefin to the polymerization reactor. Preferably the process is a continuous process. Typical polymerization temperatures for a gas phase process are from about 30°C to about 120°C and typical pressures are up to about 70kg/cm² (1000 psi), with pressures from about 7kg/cm² to 35kg/cm² (100 to about 500 psi) being preferred.

In both the liquid phase and the gas-phase polymerization processes, molecular hydrogen is added to the reaction mixture as a chain transfer agent to regulate the molecular weight of the polymeric product. Hydrogen is typically employed for this purpose in a manner well known to persons skilled in the art. The precise control of reaction conditions, and the rate of addition of feed component and molecular hydrogen is broadly within the skill of the art.

The polymers produced according to this invention are predominantly isotactic. The polymerization product is suitably a homopolymer as when a single α-olefin monomer is provided to the polymerization process. Alternatively, the process is useful for the production of copolymers or terpolymers as when two or more α-olefins are provided to the polymerization process of the invention such as in the production of EPR or polypropylene impact copolymers.

### Illustrative Embodiment I

### Preparation of Procatalyst component

In a stirred reactor vessel, 2.0 g (10.5 mmol) of titanium tetrachloride, 3.76 g (15.7 mmol) of 95% titanium tetraethoxide, 8.12 g (71 mmol) of magnesium ethoxide and 0.94 g (8.7 mmol) of o-cresol were slurried in 100 g of chlorobenzene and 5.4 g of ethanol was added while the mixture was stirred at 250 rpm. The reaction was maintained at 75°C for about 120 minutes then the temperature was then raised to 90°, and the ethanol azeotrope removed by conventional means. After about 120 minutes, the mixture was filtered while hot, and the solids thus recovered were washed three times with 125 ml of isooctane and then dried under flowing nitrogen for about 120 minutes.

### Illustrative Embodiment II

### Preparation of Procatalyst Precursors

The olefin polymerization procatalyst component of Illustrative Embodiment I was used to prepare various procatalysts as described below.
A. To 3.6 g (12.8% Mg) of the procatalyst component in 40ml of chlorobenzene, 2.03ml (28 mmol) of thionyl chloride was added (chlorine:ethoxide ratio of about 1:1). The mixtures was stirred at 80°C for 60 minutes, filtered hot, and dried under nitrogen.
B. To 3.6 g (12.8% Mg) of the procatalyst component in 40 ml of chlorobenzene or isoctane, 1.60 ml (14 mmol) of silicon tetrachloride was added. The mixture was stirred at 80°C for 60 minutes and then filtered hot and dried under nitrogen.
C. To 3.6 g (12.8% Mg) of the procatalyst component in 40 ml of chlorobenzene, 6.11 ml (56 mmol) of titanium tetrachloride was added. The mixture was stirred at 110°C for 60 minutes and then filtered hot and dried under nitrogen.

### Illustrative Embodiment III

### Preparation of Procatalyst And Then Catalyst

Each procatalyst precursor product of Illustrative Embodiment II was utilized in the preparation of a respective catalyst and further polymerization of propylene by stirring with diisobutyl phthalate (1.25 mmol, 2.00 mmol or 2.75 mmol) in a volume of 40 to 55 ml of a 50/50 by (vol/vol) mixture of titanium tetrachloride/chlorobenzene for every 19 mmoles of the precursor for 1 hour at 110°C. The resulting mixture was filtered while hot and the solids recovered. 40 to 55 ml of the 50/50 mixture was again added to the solid and stirred at 110°C for 60 minutes. The resulting slurry was filtered and solids were rinsed six times with 125 ml of isooctane at room temperature, and then dried for 120 minutes under flowing nitrogen.

Each procatalyst was converted to an olefin polymerization catalyst by mixing with triethylaluminum cocatalyst and n-propyltrimethoxysilane as the organosilane selectivity control agents. The catalysts were employed to polymerize propylene in a slurry-phase process in liquid propylene as the diluent. The polymerizations took place in a 1-gallon (3.8 litre) autoclave for 1 hour at 67°C with varying amounts of hydrogen (32-43 mmol of hydrogen). Sufficient catalyst components were provided to give an Al/Si/Ti molar ratio of 100/25/1 (or a Al/Si/procatalyst weight ratio of 160/17/1).

The results of these polymerizations are shown in Table I and II wherein "Productivity" refers to the yield of polypropylene polymer in kilograms ("Kg") of polymer/g of catalyst. The stereospecificity of the catalyst is measured by determining the percent by weight of xylene solubles (termed XS) in accordance with the regulations of the U.S. Food and Drug Administration Regulation, 21 C.F.R. 177.1520. The xylene soluble portion consists primarily of amorphous (atactic) polymer and semi-crystalline polymer. The percent titanium (Ti %wt) is measured as the amount of titanium present in the procatalyst based on the weight of the procatalyst. Bulk density (BD) of the polymer products is indicated in terms of g of polymer per cc.

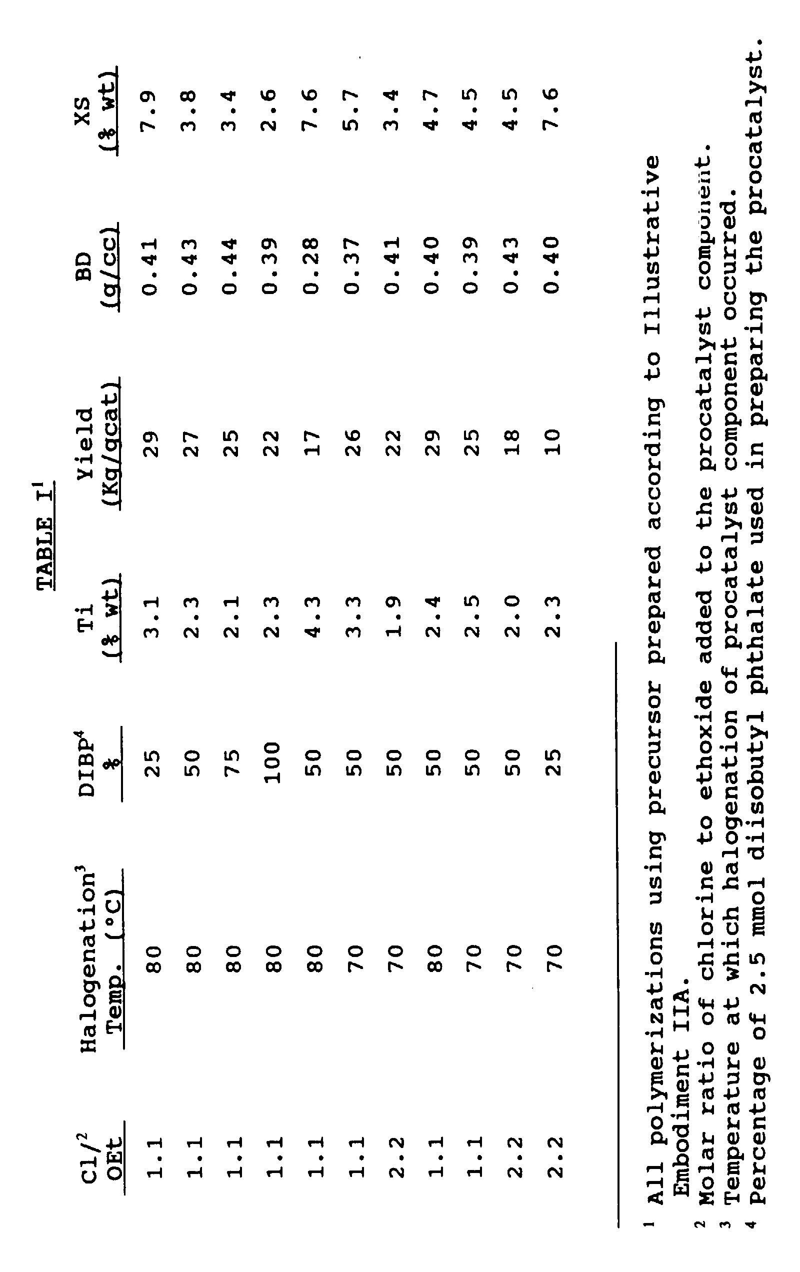

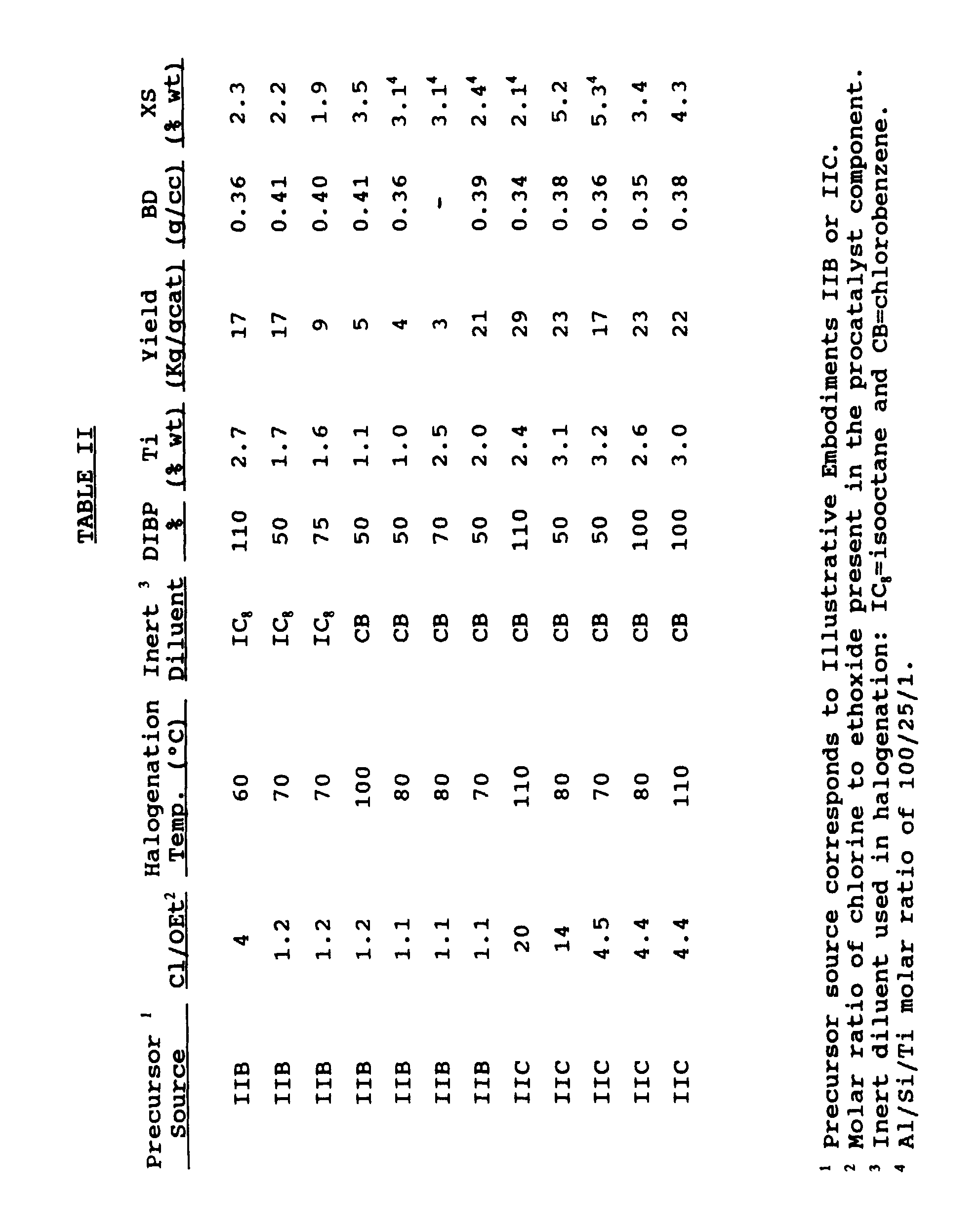

### Comparative Catalysts

A. The procatalyst component of Illustrative Embodiment I was stirred with 2.25 mmol diisobutyl phthalate in a volume of 55 ml of a 50/50 by (vol/vol) mixture of titanium tetrachloride/chlorobenzene for every 19 mmoles of magnesium precursor for 1 hour at 110°C. The resulting mixture was filtered while hot and the solids recovered thereby were washed with a fresh 55 ml portion of the 50/50 mixture including 0.05 mmol phthalolyl chloride. The resulting slurry was stirred at 110°C for 60 minutes, filtered and slurried again in fresh 50/50 mixture. The slurry was stirred at 110°C for 30 minutes. The solids were rinsed six times with 125 ml of isooctane at room temperature, and then dried overnight under flowing nitrogen.
B. The procatalyst component Illustrative Embodiment I was stirred with 2.75 mmol diisobutyl phthalate in a volume of 55 ml of a titanium tetrachloride for every 19 mmoles of magnesium precursor for 1 hour at 115°C. The resulting mixture was filtered while hot and the solids recovered thereby were washed with a fresh 55 ml portion of 50/50 titanium tetrachloride chlorobenzene. The resulting slurry was stirred at 110°C for 60 minutes, and filtered. The solid was washed once again with 55 ml of the 50/50 mixture at 110°C. The solids were rinsed six times with 125 ml of isooctane at room temperature, and then dried overnight under flowing nitrogen.

Each Comparative procatalyst (A and B), was converted to an olefin polymerization catalyst by mixing with triethylaluminum cocatalyst and n-propyltrimethoxysilane as selectivity control agent. The catalysts were employed to polymerize propylene in a slurry-phase process in liquid propylene as diluent. The polymerizations took place in a 1-gallon autoclave for 1 hour at 67°C with 43 mmol of added hydrogen. Unless indicated otherwise sufficient catalyst components were provided to give an Al/Si/Procatalyst molar ratio of 160/17/1. The results of the polymerizations are provided in Table III.

**TABLE III1**

| Cl/²OEt | DIBP % | Ti (% wt) | Yield (Kg /gcat) | BD (g/cc) | XS (% wt) |
|---|---|---|---|---|---|
| 39³ | 120 | 2.7 | 26 | 0.32 | 3.1 |
| 28³ | 120 | 3.1 | 26 | 0.33 | 5.0 |
| 39³ | 90 | 3.1 | 24 | 0.35 | 5.4 |
| 20 | 90 | 3.6 | 33 | 0.36 | 6.2 |
| 20 | 90 | 3.4 | 32 | 0.38 | 5.4 |

| | | | | | |
|---|---|---|---|---|---|
| ¹Comparative catalyst system as described in Comparative Catalysts A and B. ² Molar ratio of chlorine to ethoxide added to the procatalyst. | | | | | |
| ³ Comparative Catalyst B. | | | | | |

## Claims

1. A procatalyst obtained by:
(a) contacting at elevated temperature to form a procatalyst precursor
(i) a solid procatalyst component obtained by contacting a magnesium alkoxide, a metal alkoxide, a metal halide, a phenolic compound and an alkanol, and then optionally removing alkanol from the resulting mixture; and
(ii) at least one halogenating compound which is a halogenated transition metal compound, halogenated non-metallic compound or a mixture thereof, in the presence or absence of an inert diluent but in the absence of an electron donor; and
(b) contacting the procatalyst precursor with a tetravalent titanium halide in the presence of an electron donor.

2. A procatalyst of claim 1 wherein the halogenating compound is thionyl chloride, tin tetrachloride, titanium tetrachloride, aluminum trichloride or silicon tetrachloride.

3. A procatalyst of claim 2 wherein the halogenating compound is thionyl chloride.

4. A procatalyst of any one of claim 1 to 3 wherein the electron donor is an ester of an aromatic monocarboxylic or dicarboxylic acid.

5. A procatalyst of any one of the preceding claims wherein step (b) is conducted in the presence of an inert diluent.

6. A catalyst obtained by contacting the procatalyst of any one of claims 1 to 5 with an organoaluminum cocatalyst and a selectivity control agent.

7. A catalyst of claim 6 wherein the procatalyst is of claim 4.

8. A catalyst according to claim 6 or 7 wherein the selectivity control agent is an organosilane of the formula R'ᵣSi(OR)₄₋ᵣ wherein R' is alkyl or aryl of up to 12 carbon atoms, R is alkyl of up to 25 carbon atoms, and r is 0 to 3.

9. A process of polymerizing one or more α-olefins by contacting the one or more α-olefins under polymerization conditions with the catalyst of any one of claims 6 to 8.

## Patentansprüche

1. Prokatalysator, erhalten durch:
(a) Kontaktieren bei erhöhter Temperatur, um eine Prokatalysator-Vorstufe zu bilden,
(i) einer festen Prokatalysator-Komponente, erhalten durch Kontaktieren eines Magnesiumalkoxids, eines Metallalkoxids, eines Metallhalogenids, einer phenolischen Verbindung und eines Alkanols, und dann gegebenenfalls Abtrennen des Alkanols von dem erhaltenen Gemisch; und
(ii) mindestens einer halogenierenden Verbindung, die eine halogenierte Übergangsmetallverbindung, eine halogenierte, nicht-metallische Verbindung oder eine Mischung davon ist, in Gegenwart oder Abwesenheit eines inerten Verdünnungsmittels, jedoch in Abwesenheit eines Elektronendonors; und
(b) Kontaktieren der Prokatalysator-Vorstufe mit einem vierwertigen Titanhalogenid in Gegenwart eines Elektronendonors.

2. Prokatalysator nach Anspruch 1, worin die halogenierende Verbindung Thionylchlorid, Zinntetrachlorid, Titantetrachlorid, Aluminiumtrichlorid or Siliciumtetrachlorid ist.

3. Prokatalysator nach Anspruch 2, worin die halogenierende Verbindung Thionylchlorid ist.

4. Prokatalysator nach irgendeinem der Ansprüche 1 bis 3, worin der Elektronendonor ein Ester einer aromatischen Monocarbonsäure oder Dicarbonsäure ist.

5. Prokatalysator nach irgendeinem der vorangehenden Ansprüche, worin Stufe (b) in Gegenwart eines inerten Verdünnungsmittels durchgeführt wird.

6. Katalysator, erhalten durch Kontaktieren des Prokatalysators nach irgendeinem der Ansprüche 1 bis 5 mit einem Organoaluminium-Cokatalysator und einem Selektivitätsregler.

7. Katalysator nach Anspruch 6, worin der Prokatalysator aus Anspruch 4 ist.

8. Katalysator nach Anspruch 6 oder 7, worin der Selektivitätsregler ein Organosilan der Formel R'ᵣSi(OR)₄₋ᵣ, ist, worin R' Alkyl oder Aryl mit bis zu 12 Kohlenstoffatomen ist, R Alkyl mit bis zu 25 Kohlenstoffatomen ist und r 0 bis 3 ist.

9. Verfahren zur Polymerisation eines oder mehrerer α-Olefine durch Kontaktieren des einen oder der mehreren α-Olefine unter Polymerisationsbedingungen mit dem Katalysator nach irgendeinem der Ansprüche 6 bis 8.

## Revendications

1. Procatalyseur obtenu :
(a) en mettant en contact à température élevée pour former un précurseur de procatalyseur
(i) un constituant procatalytique solide obtenu en mettant en contact un alcoolate de magnésium, un alcoolate métallique, un halogénure métallique, un composé phénolique et un alcanol, puis en éliminant facultativement l'alcanol du mélange résultant ; et
(ii) au moins un composé d'halogénation qui est un composé de métal de transition halogéné, un composé non métallique halogéné et un de leurs mélanges, en la présence ou en l'absence d'un diluant inerte mais en l'absence d'un donneur d'électrons ; et
(b) en mettant en contact le précurseur de procatalyseur avec un halogénure de titane tétravalent en présence d'un donneur d'électrons.

2. Procatalyseur suivant la revendication 1, dans lequel le composé d'halogénation est le chlorure de thionyle, le tétrachlorure d'étain, le tétrachlorure de titane, le trichlorure d'aluminium ou le tétrachlorure de silicium.

3. Procatalyseur suivant la revendication 2, dans lequel le composé d'halogénation est le chlorure de thionyle.

4. Procatalyseur suivant l'une quelconque des revendications 1 à 3, dans lequel le donneur d'électrons est un ester d'un acide monocarboxylique ou dicarboxylique aromatique.

5. Procatalyseur suivant l'une quelconque des revendications précédentes, dans lequel l'étape (b) est mise en oeuvre en présence d'un diluant inerte.

6. Catalyseur obtenu en mettant en contact le procatalyseur suivant l'une quelconque des revendications 1 à 5 avec un cocatalyseur consistant en un composé organique d'aluminium et avec un agent d'ajustement de sélectivité.

7. Catalyseur suivant la revendication 6, dans lequel le procatalyseur est un procatalyseur suivant la revendication 4.

8. Catalyseur suivant la revendication 6 ou 7, dans lequel l'agent d'ajustement de sélectivité est un organosilane de formule R'ᵣSi(Or)₄₋ᵣ dans laquelle R' représente un groupe alkyle ou aryle ayant jusqu'à 12 atomes de carbone, R représente un groupe alkyle ayant jusqu'à 25 atomes de carbone et r a une valeur de 0 à 3.

9. Procédé pour la polymérisation d'une ou plusieurs α-oléfines en mettant en contact la ou les α-oléfines dans des conditions de polymérisation avec le catalyseur suivant l'une quelconque des revendications 6 à 8.
